# DEMANDE DE BREVET EUROPEEN

(11) **EP 2 829 494 A1**
(43) Date de publication de la demande: **28.01.2015**
(21) Numéro de dépôt: 14177584.1
(22) Date de dépôt: 18.07.2014
(51) Int. Cl.: B65F 1/02, B65F 1/14

(54) **Conteneur pour déchets à panneaux assemblés**

(30) Priorité: 25.07.2013 FR 1357368
(71) Demandeur: COMPAGNIE PLASTIC OMNIUM, 69007 Lyon (FR)
(72) Inventeur: Troton, Jean, 01800 Meximieux (FR)
(74) Mandataire: Remy, Vincent Noel Paul

(57) **Abrégé**

Conteneur (2) pour déchets d'une capacité d'au moins 1500 litres, du type comprenant une paroi latérale assemblée à partir d'au moins un premier et un deuxième élément, le premier élément comprend une première partie pariétale (60) venue de matière avec un bord (64) formant ailette de cette première partie pariétale (60), le deuxième élément comprend une deuxième partie pariétale (62) s'étendant dans le prolongement de la première partie pariétale (60), au-delà d'une zone d'assemblage (68) entre ces deux parties pariétales (60, 62), le bord (64) formant ailette s'étendant le long de la zone d'assemblage (68) et ne s'étendant pas, le cas échéant, le long d'une éventuelle arête de la paroi du conteneur (2), l'ailette étant une ailette interne au conteneur (2) et présente une largeur comprise entre 5 cm et 35 cm, et de préférence entre 8 cm et 24 cm sur au moins une partie de sa longueur.

## Description

On utilise notamment des conteneurs en tôle d'acier. Une tôle forme typiquement une face, ou bien plusieurs faces du conteneur, la tôle étant pliée le long d'une arête de ce conteneur.

On utilise également des conteneurs en matériaux de type plastique, ou en composite, par exemple formés par un matériau thermoplastique ou thermodurcissable renforcé par des fibres, par exemple des fibres de verre.

Le conteneur est parfois obtenu par moulage, ou roto-moulage. On peut notamment utiliser différents procédés de moulage, par exemple non limitatif les procédés « SMC », ou « RIM », ou « RTM » :

Le sigle « SMC » provient de l'appellation en langue anglaise « sheet molding compound » (composé à moulage en feuille), et désigne un procédé qui utilise un semi-produit de moulage en feuille.

Le sigle « RIM » ou « reaction injection molding » (moulage par injection-réaction) désigne un procédé qui utilise une réaction chimique au cours du moulage.

Le sigle « RTM » provient de l'appellation en langue anglaise « resine transfert molding » (moulage par transfert de résine) et désigne un procédé qui utilise typiquement un transfert de résine à pression modérée dans un moule comprenant déjà des éléments de renfort.

On peut par ces procédés obtenir notamment des éléments minces, constitués souvent de résine thermodurcissable, généralement de type polyester, vinylester, ou époxy, mais éventuellement d'un autre type de résine, qui imprègne par exemple des fibres de verre ou d'un autre renfort (par exemple avec 20 à 30 % poids de renfort), avec parfois des charges.

Les géométries de ces conteneurs peuvent être très variées, et couvrir des géométries à faces planes (par exemple à quatre faces latérales ou plus), et/ou courbes, et dans ce dernier cas cylindriques ou non cylindriques, galbées ou non etc...

Les différents éléments de ces conteneurs peuvent être assemblés entre eux par différents moyens connus, par exemple par soudage (pour les conteneurs métalliques), par collage, rivetage, sertissage, clinchage, ou par d'autres méthodes.

On utilise typiquement pour la fabrication d'un tel conteneur des tôles ou panneaux de grande largeur, chaque paroi latérale étant formée d'un panneau unique, ou par une tôle unique. De telles tôles de grande largeur, par exemple comprise entre 100 et 250 cm sont peu ou pas auto-stables, et difficiles à manipuler et transporter, par exemple difficiles à manipuler par un homme seul, ou même par deux hommes. De plus, un conteneur formé de parties de tôles de grandes dimensions est de rigidité relativement faible, et typiquement relativement sonore du fait de la présence de ces parties de tôles de grandes dimensions.

Les problèmes liés à la difficulté de manipulation et de transport, la rigidité faible, et à l'amplification sonore (par exemple l'effet de résonance sonore) se posent en des termes sensiblement identiques pour des conteneurs formés d'éléments moulés de grandes dimensions en matériaux plastique ou composite.

L'invention a notamment pour but de remédier à l'un au moins de ces inconvénients et de permettre par exemple de pouvoir manipuler et transporter des composants pour la fabrication du conteneur de façon plus aisée, et d'obtenir un conteneur de rigidité améliorée et/ou moins sonore.

A cet effet, l'invention a notamment pour objet un conteneur pour déchets d'une capacité d'au moins 1500 litres (1.5 m3), du type comprenant une paroi latérale assemblée à partir d'au moins un premier élément et un deuxième élément,
caractérisé en ce que le premier élément comprend une première partie pariétale venue de matière avec un bord formant ailette de cette première partie pariétale, le deuxième élément comprend une deuxième partie pariétale s'étendant dans le prolongement de la première partie pariétale, au-delà d'une zone d'assemblage entre ces deux parties pariétales, le bord formant ailette s'étendant le long de la zone d'assemblage et ne s'étendant pas, le cas échéant, le long d'une éventuelle arête de la paroi du conteneur.

Ainsi, l'ailette est rattachée à une paroi du conteneur dans une zone de paroi dépourvue d'arête du conteneur (même si une, ou les deux extrémités de l'ailette peuvent atteindre une arête). Elle constitue donc un raidisseur structurel de la paroi du conteneur, augmentant sa rigidité et réduisant l'effet de résonance sonore. De plus l'assemblage de deux parties différentes permet une manipulation et un transport plus aisé de chacune de ces parties, séparément ou empilées.

On comprendra que l'expression « dans le prolongement » signifie « prolongeant sensiblement » : En effet la zone d'assemblage peut être une zone à recouvrement des deux parties pariétales. Dans une telle mise en oeuvre de l'invention, il y a un petit décalage de ces deux parties pariétales (une légère marche d'escalier) du à l'épaisseur de la paroi, qui est très faible par rapport aux dimensions du conteneur.

De préférence, l'ailette est une ailette interne au conteneur. L'absence d'un bord mince extérieur en saillie est favorable du point de vue de la sécurité. D'autres avantages seront exposés ci-après.

Selon un premier mode de réalisation, la première partie pariétale est un premier panneau, à bord tombé, ce bord tombé formant ledit bord formant ailette, et la deuxième partie pariétale est un deuxième panneau, le premier et le deuxième panneau formant de préférence ensemble une paroi à face latérale plane du conteneur.

Un tel panneau plat à bord tombé est aisé à réaliser, par exemple en tôle à bord plié, mais également par moulage du fait de sa forme simple. Le bord tombé peut être perpendiculaire ou non à la première partie pariétale.

De préférence, le deuxième panneau est également un panneau à bord tombé, le premier panneau et le deuxième panneau étant assemblés à plat par leurs bords tombés.

Ceci augmente encore l'effet d'ailette et de renfort structurel de la paroi. La zone d'assemblage a donc un double rôle fonctionnel : assemblage, mais aussi renfort structurel.

Chaque face plane du conteneur peut être composée de plusieurs panneaux de ce type, par exemple de 2 à 5 panneaux, par exemple étagés de façon sensiblement verticale. De préférence, le premier panneau et le deuxième panneau forment ensemble une paroi dont la surface forme une face latérale plane du conteneur, constituée par deux trapèzes rectangles identiques adjacents, ou deux rectangles adjacents, correspondant respectivement à une surface de la première partie pariétale et de la deuxième partie pariétale.

Un conteneur comprenant une face latérale plane comprend de préférence une pluralité de parois à face latérale plane, et chacune des parois à face latérale plane est avantageusement constituée par deux panneaux adjacents à bord tombé assemblés à plat par leurs bords tombés.

Un conteneur peut de façon préférée comprendre au moins deux parois à face latérale plane, soit FLA et FLB , adjacentes au niveau d'une arête latérale du conteneur, le premier panneau à bord tombé appartenant à FLA, le premier élément comprenant également un troisième panneau, à bord tombé, appartenant à FLB, venu de matière avec le premier panneau et adjacent à ce premier panneau au niveau d'un pli formant une partie de l'arête latérale du conteneur.

Ainsi, on peut utiliser un même élément pour former deux panneaux appartenant à deux faces latérales adjacentes du conteneur. Lorsqu'on utilise une tôle pour fabriquer l'élément, on peut notamment transporter cette tôle à plat, et la plier sur le lieu d'assemblage pour former un pli d'arête du conteneur.

Un conteneur peut même comprendre quatre parois latérales planes, chacune de ces parois latérales comprenant un panneau à bord tombé, ces panneaux étant venus de matière entre eux, et adjacents deux à deux au niveau d'un pli d'arête latérale du conteneur. Chaque paroi latérale peut être constituée par deux panneaux à bord tombé, notamment assemblés à plat par ces bords tombés. Dans ce cas, toute la paroi latérale peut être formée à partir de seulement deux éléments.

Selon un deuxième mode de réalisation, la première partie pariétale est une paroi courbe, par exemple une portion de cylindre vertical. La section du cylindre peut être constante, ou non constante, par exemple avec un renflement en partie médiane, selon une forme en tonneau. On peut aussi utiliser plusieurs éléments étagés dans le sens de la hauteur (par exemple de 2 à 6 parties), et de préférence deux éléments. On peut également utiliser plusieurs éléments étagés dans le sens circonférentiel (par exemple de 2 à 6 éléments), et de préférence deux, trois, ou quatre éléments.

Le conteneur comprend avantageusement au moins un premier orifice d'introduction de déchets, et le bord formant ailette forme une rampe interne inclinée de glissement pour un déchet introduit par ce premier orifice d'introduction de déchets, de préférence une rampe d'angle constant par rapport à l'horizontale.

Lorsqu'un bord formant ailette, ou un bord tombé forme une rampe interne, on utilisera indifféremment les termes rampe et bord tombé par la suite.

L'ailette a dans ce cas un rôle fonctionnel complémentaire, celui de pouvoir supprimer, ou au moins limiter notablement la casse des déchets fragiles, notamment en verre, tels que des bouteilles vides. Ces bouteilles peuvent donc être récupérées et recyclées.

Typiquement, la rampe interne est inclinée d'un angle compris entre 10° et 45° par rapport à l'horizontale. Ceci permet de ralentir les bouteilles par frottement de glissement.

De façon préférée, la rampe a une longueur de raccordement à la première partie pariétale, et une largeur comprise entre 5 cm et 35 cm, et de préférence entre 8 cm et 24 cm sur au moins une partie de sa longueur. Une telle largeur est suffisante pour accueillir des bouteilles de verre.

La rampe peut s'étendre de façon sensiblement perpendiculaire à la paroi, ou bien en formant un angle différent de 90°, par exemple compris entre 60° et 120°. Elle peut être plane et/ou gauche, par exemple avec une inclinaison finale en dévers orientant un déchet vers l'intérieur du conteneur en partie terminale.

Avantageusement, le conteneur comprend un matériau d'amortissement sonore et/ou un matériau amortissant les chocs, par exemple une plaque en élastomère, disposé de façon à recevoir l'impact d'un déchet glissant sur la rampe.

Le conteneur peut aussi comprendre un deuxième orifice d'introduction de déchets accessible à une personne à mobilité réduite, disposé de façon à permettre l'introduction de déchets en dessous de la rampe interne inclinée.

Il peut alors avantageusement comprendre une paroi interne, souple ou rigide, s'étendant au moins en partie vers le bas à partir d'une portion d'un bord interne de la rampe, pour former en dessous de cette rampe un volume dédié à des déchets introduits par le deuxième orifice.

La paroi interne peut être notamment un textile ou un tapis relativement souple, ou bien une paroi rigide venue de matière avec la rampe, par exemple un bord plié lorsque la rampe est en tôle métallique.

La rampe a alors encore un rôle fonctionnel supplémentaire, pour la création d'un volume dédié à l'usage du conteneur par une personne à mobilité réduite

Le conteneur peut par exemple avoir une capacité comprise entre 1500 et 5000 litres, bornes comprises.

Sa paroi latérale peut être composée d'éléments en matériau(x) thermoplastique(s) ou thermodurcissable(s), de préférence renforcé(s), par exemple en polyester renforcé.

Sa paroi latérale peut également être composée d'éléments en tôle métallique, par exemple de panneaux en tôle d'acier.

L'invention sera mieux comprise à la lecture des figures annexées, qui sont fournies à titre d'exemples et ne présentent aucun caractère limitatif, dans lesquelles :
La figure 1 représente schématiquement la surface latérale d'un conteneur selon l'invention.
La figure 2 représente la partie inférieure du conteneur de la figure 1.
La figure 3 représente un mode de raccordement de deux panneaux à bord tombé.
La figure 4 représente un mode de raccordement d'un panneau à bord tombé avec un autre panneau.
La figure 5 représente un mode de découpage et pliage d'une tôle pour la réalisation de plusieurs panneaux.
La figure 6 représente schématiquement un raccordement de deux parties pariétales non planes d'un conteneur selon l'invention.

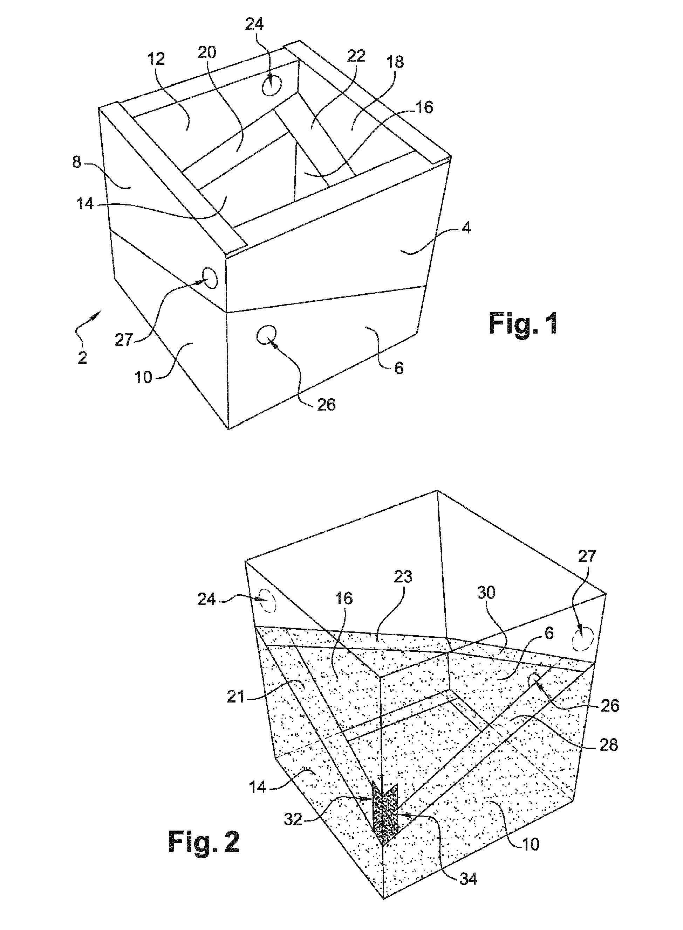

On se réfère maintenant à la figure 1, qui représente la surface latérale d'un conteneur métallique 2 selon l'invention, comprenant une pluralité de panneaux en tôle d'acier 4, 6, 8, 10, 12, 14, 16, 18. Chaque face latérale du conteneur comprend deux panneaux adjacents, par exemple un premier panneau 4 adjacent à un deuxième panneau 6, ou bien les panneaux 8 et 10, ou 12 et 14, ou 16 et 18.

Ces panneaux sont des panneaux à bord tombé, le bord tombé étant obtenu par pliage de l'extrémité de la tôle permettant de réaliser le panneau, par exemple le bord tombé 20 du panneau 12 ou le bord tombé 22 du panneau 18.

Ce bord tombé 22 forme une rampe inclinée vers le bas pour un déchet, tel qu'une bouteille en verre introduite par un premier orifice 24 d'introduction de déchets disposé au-dessus sur le panneau 12.

Un deuxième orifice d'introduction de déchets 26, accessible à une personne à mobilité réduite, par exemple situé à moins de 1,30 m du sol est disposé de façon à permettre l'introduction de déchets en dessous de la rampe interne inclinée du panneau 4, non visible sur la figure 1. Un autre orifice 27 d'introduction de déchets est par ailleurs disposé sur le panneau 8, au-dessus de la rampe inclinée du panneau 4, pour glissement sur la rampe interne inclinée du panneau 4.

On se réfère maintenant à la figure 2, qui représente la partie inférieure du conteneur de la figure 1, vu sous un angle différent. On peut notamment voir les bords tombés en tôle repliée 21, 23, 28 et 30. On a également représenté, de façon fictive, les bords d'arête du conteneur, les orifices 24, 26 et 27, et deux plaques 32 et 34 en un matériau d'amortissement sonore et d'amortissant des chocs, par exemple du caoutchouc ou un autre élastomère. La plaque 32 est disposée en vis-à-vis de la rampe 28 (ou d'une rampe du panneau supérieur 8 non représenté non représenté sur la figure 2, venant au-dessus de la rampe 28), et la plaque 34 est disposée en vis-à-vis de la rampe 21 (ou de la rampe 20 du panneau supérieur 12 non représenté sur la figure 2, venant au-dessus de la rampe 21). Ceci permet à la fois d'éviter le bris de la plus grande partie des bouteilles en verre, et de réduire le bruit d'impact.

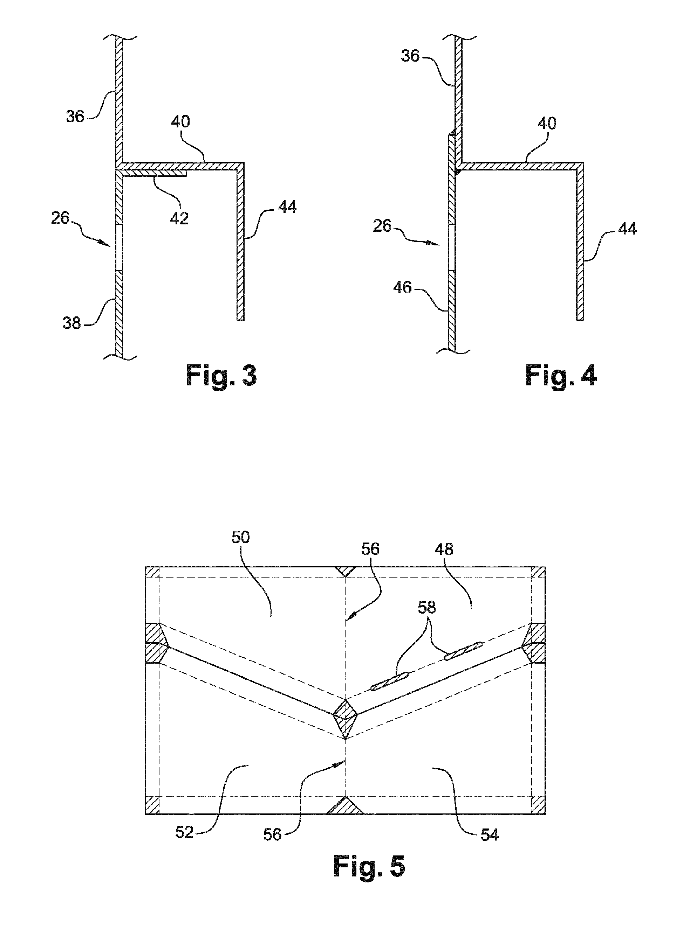

On se réfère maintenant à la figure 3, qui représente un mode de raccordement de deux panneaux 36, 38 à bords tombés 40 et 42. Le bord tombé 40 est beaucoup plus large que le bord tombé 42, car il est utilisé comme rampe de glissement. Ces deux panneaux peuvent être assemblés au niveau de leurs bords tombés, par collage, rivetage, sertissage, clinchage, ou par d'autres méthodes d'assemblage. La zone d'assemblage est la zone de recouvrement entre les bords 40 et 42.

Un bord plié 44 forme une paroi interne rigide venue de matière avec la rampe, et permet de réaliser sous le bord 40 un volume dédié à des déchets introduits par le deuxième orifice 26.

On se réfère maintenant à la figure 4, qui représente un mode de raccordement d'un panneau 36 à bord tombé avec un autre panneau 46 qui n'est pas à bord tombé. L'assemblage est ici représenté par des soudures, mais on peut aussi utiliser avantageusement d'autres moyens parmi ceux représentés précédemment, par exemple le collage, les soudures pouvant conduire à des déformations du conteneur. Dans ce mode d'assemblage, on considère que les panneaux 36 et 46 s'étendent dans le prolongement l'un de l'autre, malgré le très faible décalage du à l'épaisseur de la tôle à partir de laquelle ils sont fabriqués.

La zone d'assemblage est ici la zone de recouvrement entre les panneaux 36 et 46 (entre les soudures représentées).

On se réfère maintenant à la figure 5, qui représente un mode de découpage et pliage d'une tôle pour la réalisation de plusieurs panneaux. Les traits pleins représentent les coupes, et les traits pointillés les zones de pliage. Les parties découpées sont indiquées en hachuré.

On voit qu'on peut réaliser à partir de cette tôle quatre panneaux 48, 50, 52 et 54. La tôle sera pliée en son milieu selon un pli 56 formant une arête verticale du conteneur. Les panneaux 48 et 50 sont venus de matière entre eux, ainsi que les panneaux 52 et 54. Des découpes optionnelles 58 peuvent être faites, s'étendant le long des zones de pliage, pour faciliter ce pliage (qui peut être fait par exemple sur le site d'assemblage, si l'on souhaite transporter des tôles planes pour des raisons de facilité d'empilage).

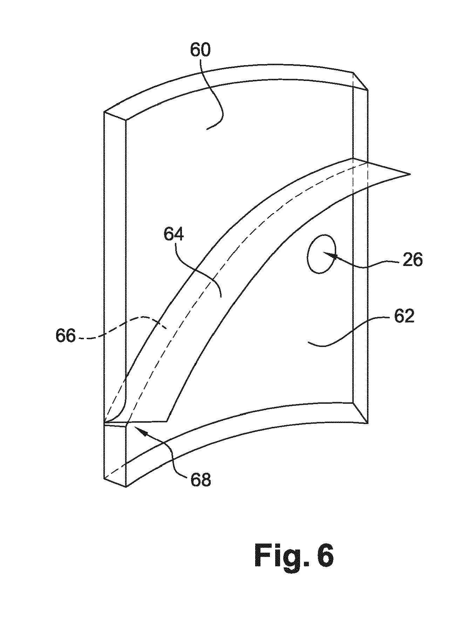

On se réfère maintenant à la figure 6, qui représente schématiquement un raccordement de deux parties pariétales 60 et 62 non planes d'un conteneur selon l'invention. Ces parties pariétales 60 et 62 sont délimitées par des bords dont on n'a pas représenté l'épaisseur sur la figure 6. En particulier, la partie pariétale 60 comprend un bord large 64 formant rampe de glissement pour des bouteilles en verre, et la partie pariétale 62 comprend un bord plus mince 66 représenté par un trait pointillé, permettant son assemblage au bord large 64.

Les éléments ayant ce type de géométrie sont avantageusement fabriqués par moulage, par exemple par moulage de polyester renforcé par des fibres de verre. Un mode d'assemblage bien adapté à de tels éléments est le collage, par exemple ici le collage des bords 64 et 66. La zone d'assemblage 68 est la zone de recouvrement entre ces bords 64 et 66.

L'invention n'est pas limitée aux modes de réalisations présentées et d'autres modes de réalisation apparaîtront clairement à l'homme du métier. Il est notamment possible d'utiliser, conjointement ou en substitution à des caractéristiques techniques exposées précédemment, toute(s) caractéristique(s) technique(s) connue(s) de l'état de la technique, dans la mesure ou il n'y a pas d'incompatibilité avec la mise en oeuvre de l'invention. En particulier, on pourra fabriquer des conteneurs selon l'invention présentant de 3 à 8 faces latérales, ou de forme cylindrique droite ou galbée en partie médiane, et tous types de matériaux métalliques et/ou non métalliques, homogènes et/ou composites (avec tous type de fibres : verre, carbone, aramide ou autre) pourront être utilisés pour la mise en oeuvre de l'invention.

## Revendications

1. Conteneur (2) pour déchets d'une capacité d'au moins 1500 litres, du type comprenant une paroi latérale assemblée à partir d'au moins un premier et un deuxième élément,
**caractérisé en ce que** le premier élément comprend une première partie pariétale (60) venue de matière avec un bord (64) formant ailette de cette première partie pariétale (60), le deuxième élément comprend une deuxième partie pariétale (62) s'étendant dans le prolongement de la première partie pariétale, au-delà d'une zone d'assemblage entre ces deux parties pariétales, le bord (64) formant ailette s'étendant le long de la zone d'assemblage (68) et ne s'étendant pas, le cas échéant, le long d'une éventuelle arête de la paroi du conteneur, l'ailette étant une ailette interne au conteneur et présente une largeur comprise entre 5 cm et 35 cm, et de préférence entre 8 cm et 24 cm sur au moins une partie de sa longueur.

2. Conteneur selon la revendication 1, dans lequel la première partie pariétale est un premier panneau (4, 8, 12, 18, 36), à bord tombé (20, 22, 40), ce bord tombé formant ledit bord formant ailette, et la deuxième partie pariétale est un deuxième panneau (6, 10, 14, 16, 38), le premier et le deuxième panneau formant de préférence ensemble une paroi à face latérale plane du conteneur.

3. Conteneur selon la revendication 2, dans lequel le deuxième panneau est également un panneau (6, 10, 14, 16, 38) à bord tombé (30, 28, 21, 23, 42), le premier panneau et le deuxième panneau étant assemblés à plat par leurs bords tombés.

4. Conteneur selon la revendication 3, dans lequel le premier panneau (4) et le deuxième panneau (6) forment ensemble une paroi dont la surface forme une face latérale plane du conteneur, constituée par deux trapèzes rectangles identiques adjacents, ou deux rectangles adjacents, correspondant respectivement à une surface de la première partie pariétale et de la deuxième partie pariétale.

5. Conteneur selon l'une quelconque des revendications 3 et 4, comprenant une pluralité de parois à face latérale plane, dans lequel chacune des parois à face latérale plane est constituée par deux panneaux adjacents à bord tombé assemblés à plat par leurs bords tombés.

6. Conteneur selon l'une quelconque des revendications 2 à 5, comprenant au moins deux parois à face latérale plane, soit FL_{A} et FL_{B}, adjacentes au niveau d'une arête latérale du conteneur, dans lequel le premier panneau à bord tombé appartient à FL_{A}, le premier élément comprenant également un troisième panneau, à bord tombé, appartenant à FL_{B}, venu de matière avec le premier panneau et adjacent à ce premier panneau au niveau d'un pli formant une partie de l'arête latérale du conteneur.

7. Conteneur selon l'une quelconque des revendications 2 à 5, à section carrée ou rectangle, comprenant quatre parois latérales planes, chacune de ces parois latérales comprenant un panneau à bord tombé, ces panneaux étant venus de matière entre eux, et adjacents deux à deux au niveau d'un pli d'arête latérale du conteneur.

8. Conteneur selon la revendication 1, dans lequel la première partie pariétale (60) est une paroi courbe, par exemple une portion de cylindre vertical.

9. Conteneur selon l'une quelconque des revendications 1 à 8, comprenant au moins un premier orifice (24) d'introduction de déchets, et dans lequel ledit bord formant ailette (22) forme une rampe interne inclinée de glissement pour un déchet introduit par ledit premier orifice d'introduction de déchets, de préférence une rampe d'angle constant par rapport à l'horizontale.

10. Conteneur selon la revendication 9 dans lequel la rampe interne est inclinée d'un angle compris entre 10° et 45° par rapport à l'horizontale.

11. Conteneur selon l'une quelconque des revendications 9 et 10, dans lequel la rampe a une longueur de raccordement à la première partie pariétale.

12. Conteneur selon l'une quelconque des revendications 9 à 11, comprenant un deuxième orifice (26) d'introduction de déchets accessible à une personne à mobilité réduite, disposé de façon à permettre l'introduction de déchets en dessous de la rampe interne inclinée (64).

13. Conteneur selon la revendication 12, comprenant une paroi interne (44), souple ou rigide, s'étendant au moins en partie vers le bas à partir d'une portion d'un bord interne de la rampe (40), pour former en dessous de cette rampe (40) un volume dédié à des déchets introduits par le deuxième orifice (26).

14. Conteneur selon la revendication 9, dans lequel ladite paroi interne (44) est une paroi rigide venue de matière avec la rampe (40).

15. Conteneur selon l'une quelconque des revendications 9 à 14 comprenant un matériau d'amortissement sonore et/ou un matériau amortissant les chocs (32, 34), par exemple une plaque en élastomère, disposé de façon à recevoir l'impact d'un déchet glissant sur la rampe.

16. Conteneur selon l'une quelconque des revendications 1 à 15, dans lequel le conteneur a une capacité comprise entre 1500 litres et 5000 litres, et sa paroi latérale est composée d'éléments en matériau(x) thermoplastique(s) ou thermodurcissable(s), de préférence renforcé(s), par exemple en polyester renforcé.

17. Conteneur selon l'une quelconque des revendications 1 à 11, dans lequel le conteneur a une capacité comprise entre 1500 litres et 5000 litres, et sa paroi latérale est composée de panneaux en tôle métallique, par exemple en tôle d'acier.
